# EUROPÄISCHE PATENTSCHRIFT

(11) **EP 2 495 733 B1**
(45) Veröffentlichungstag und Bekanntmachung des Hinweises auf die Patenterteilung: **30.04.2014**
(21) Anmeldenummer: 11305227.8
(22) Anmeldetag: 03.03.2011
(51) Int. Cl.: H01B 7/04, G01L 5/10, H01B 7/32, H01B 9/00

(54) **Flexible elektrische Leitung**
Flexible electric cable
Câble électrique flexible

(43) Veröffentlichungstag der Anmeldung: 05.09.2012
(73) Patentinhaber: Nexans, 75008 Paris (FR)
(72) Erfinder: Schramm, Judith, 52499, Baesweiler (DE); Winkelbauer, Walter, 47057, Duisburg (DE); Dr. Cornelissen, Christian, 41238, Mönchengladbach (DE); Basiry, Smaeil, 41812, Erkelenz (DE); Hamacher, Heinz-Willi, 41189, Mönchengladbach (DE)
(74) Vertreter: Döring, Roger

(56) Entgegenhaltungen:
- WO-A1-2010/136062
- DE-A1- 2 810 816
- DE-A1-102006 015 878
- US-A1- 2002 079 905

## Beschreibung

Die Erfindung bezieht sich auf eine flexible elektrische Leitung, welche in einer Seele mindestens ein Sensorelement und aus isolierten elektrischen Leitern bestehende Adern aufweist, die von einem gemeinsamen Außenmantel aus Isoliermaterial umgeben sind, bei welcher das Sensorelement aus zwei jeweils einen isolierten elektrischen Leiter mit einem zugfesten Zentralelement aufweisenden Adern besteht, die zusammen mit zwei aus Isoliermaterial bestehenden Beiläufen zu einer Einheit verseilt sind, welche von einer Bandierung aus Isoliermaterial umgeben ist, über der ein Mantel angeordnet ist (DE 10 2006 015 878 A1).

Derartige Leitungen können beispielsweise bei großen Krananlagen eingesetzt werden, die sich im Hafengebiet bewegen, beispielsweise entlang eines Schienensystems. Die Leitung ist auf einer Spule aufgewickelt, welche beispielsweise auf einem Kran drehbar gelagert ist. Sie wird bei der Bewegung von Lasten bzw. des gesamten Krans auf- bzw. abgespult. Bei diesem Vorgang kann es insbesondere bei einer Änderung der Drehrichtung der Spule sowie beim Anfahren und/oder Bremsen zu auf die Leitung einwirkenden Zugbelastungen kommen. Sie können durch ein in der Leitung enthaltenes Sensorelement detektiert und zur Anzeige gebracht werden.

Die bekannte flexible Leitung nach der eingangs erwähnten DE 10 2006 015 878 A1 hat ein zentral angeordnetes Sensorelement, dessen Kapazitätswerte sich in Abhängigkeit von der Zugbelastung der Leitung ändern. Diese Änderungen können gemessen und zur Beeinflussung des Antriebs der Spule, auf welche die Leitung aufgewickelt ist, verwendet werden, um eine Entlastung der Leitung zu erreichen. Auf das Sensorelement sind bei dieser Leitung zwei Lagen von Steueradern verseilt, welche von einem Außenmantel aus Isoliermaterial umgeben sind. Mittels der Steueradern können beispielsweise Signale zu einem Kran bzw. zum Antrieb der Spule übertragen werden, auf welche die Leitung aufgewickelt ist. Ebenso ist es möglich, über die Steueradern Hilfsaggregate einer Krananlage mit einer Spannung von maximal 1 kV zu versorgen. Das Sensorelement weist ein aus zwei isolierten elektrischen Leitern bestehendes Aderpaar auf. Jede Ader desselben besteht aus einem Kernelement aus einem zugfesten Kunststoff, einer auf das Kernelement verseilten Lage aus Kupferdrähten sowie einer diese Lage umhüllenden Schicht aus einem komprimierbaren lsolierwerkstoff. Das Aderpaar ist zusammen mit zwei Beiläufen verseilt, die aus Polyethylenterephthalat-Zwirnen bestehen. Das Sensorelement ist von einem Mantel aus Kunststoff umgeben.

Der Erfindung liegt die Aufgabe zugrunde, die eingangs geschilderte Leitung derart weiterzubilden, daß auch eine Energieübertragung auf Mittelspannungsebene mit über 1 kV liegenden Spannungen ermöglicht wird, bei gleichzeitig erhöhter Ansprechempfindlichkeit des Sensorelements.

Diese Aufgabe wird gemäß der Erfindung dadurch gelöst,
- daß in der Seele der Leitung als elektrische Adern drei miteinander verseilte, der Energieübertragung mit über 1 kV liegenden Spannungen dienende Phasenadern angeordnet sind, die jeweils zumindest eine den Leiter umgebende innere Leitschicht und eine darüber liegende Isolierung aufweisen,
- daß die Leiter der Adern des Sensorelements aus Kupferdrähten bestehen, die das zugfeste Zentralelement in zwei Lagen mit gegenläufiger Umseilrichtung umgeben,
- daß die Isolierung der Adern des Sensorelements aus einem mittels Extrusion aufgebrachten, vernetzten elastomeren Material mit einer Dielektrizitätszahl von mindestens 6,0 bei Raumtemperatur besteht,
- daß die Einheit aus miteinander verseilten Adern und Beiläufen des Sensorelements von einem Mantel aus einem elektrisch leitfähigen polymeren Material umgeben ist und
- daß die aus Phasenadern und Sensorelement bestehende Seele der Leitung von einem gemeinsamen, durch Extrusion erzeugten Innenmantel umgeben ist, über welchem der Außenmantel angeordnet ist.

Diese Leitung weist drei miteinander verseilte Phasenadern auf, mittels derer eine Energieübertragung mit über 1 kV liegenden Spannungen möglich ist. Die verwendeten Spannungen liegen mit Vorteil in der sogenannten Mittelspannungsebene zwischen 1 kV und 45 kV. Durch diese Phasenadern kann eine an die Leitung angeschlossene Anlage, beispielsweise eine Krananlage, ohne sonstige Anschlüsse mit elektrischem Strom versorgt werden. Durch den gewählten Aufbau der Leiter der Adern des Sensorelements mit zwei Lagen aus umseilten Kupferdrähten, können bei unveränderter Größe des elektrisch leitenden Querschnitts der Leiter die radialen Abmessungen der Adern verkleinert werden. Dadurch können auch die radialen Abmessungen des Sensorelements insgesamt verkleinert werden, so daß dasselbe mit Vorteil beispielsweise zentral zwischen den Phasenadern angeordnet werden kann. Die Kupferdrähte können vorzugsweise verzinnt sein.

Das Sensorelement hat durch den angegebenen Aufbau außerdem verbesserte elektrische Eigenschaften und damit eine erhöhte Ansprechempfindlichkeit. Einerseits verringert der leitfähige Mantel des Sensorelements elektrische Störeinflüsse von außerhalb desselben. Andererseits ist durch das Material der Isolierung der Adern, das eine hohe Dielektrizitätszahl von mindestens 6,0 bei Raumtemperatur hat, die Kapazität zwischen den beiden Leitern wesentlich erhöht, so daß eine größere und damit schneller und genauer meßbare Änderung dieser Kapazität infolge einer auf die Leitung wirkenden Zugbelastung entsteht. Die Dielektrizitätszahl des Materials der Isolierung der Adern liegt mit Vorteil bei mindestens 6,5 bei Raumtemperatur.

Ausführungsbeispiele des Erfindungsgegenstandes sind in den Zeichnungen dargestellt.

Es zeigen:
Fig. 1 einen Querschnitt durch eine Leitung nach der Erfindung.
Fig. 2 ein in der Leitung nach Fig. 1 vorhandenes Sensorelement in vergrößerter Darstellung.
Fig. 3 eine Einzelheit aus Fig. 2 in weiter vergrößerter Darstellung.
Fig. 4 einen Querschnitt durch eine von der Ausführungsform nach Fig. 1 abweichende Leitung.

Mit 1, 2 und 3 sind drei Phasenadern bezeichnet, mittels derer Energie vorzugsweise im Mittelspannungsbereich mit Spannungen, die über 1 kV liegen, übertragen werden kann. Die drei Phasenadern 1, 2 und 3 haben jede einen elektrischen Leiter 4, der von einer inneren Leitschicht 5 umgeben ist, über welcher eine Isolierung 6 liegt. Dieser Aufbau ist der Einfachheit halber nur für die Phasenader 1 eingezeichnet. Er gilt auch für die Phasenadern 2 und 3. Die Leiter 4 sind mit Vorteil jeweils als Leiterseile mit aus Kupfer bestehenden Drähten ausgeführt, die auch verzinnt sein können. Über den Leitern 4 kann jeweils noch eine Bandierung aus einem elektrisch leitfähigen Vliesmaterial angeordnet sein, auf welche die innere Leitschicht 5 beispielsweise durch Extrusion aufgebracht ist. Sie besteht beispielsweise aus einem durch Zusatz von Ruß elektrisch leitfähig gemachten polymeren Material.

Die Isolierung 6 besteht bei allen drei Phasenadern 1, 2 und 3 mit Vorteil aus einem Material auf der Basis von Ethylen-Propylen-Gummi (EPR). Sie wird um die innere Leitschicht 5 herum extrudiert. Über der Isolierung 6 kann noch eine äußere extrudierte Leitschicht angebracht sein, die ebenso wie die innere Leitschicht 5 aufgebaut ist.

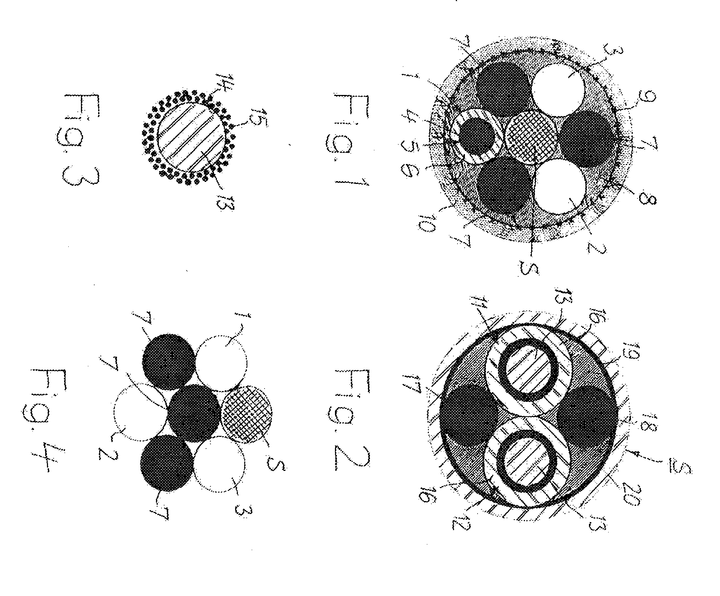

Neben den drei Phasenadern 1, 2 und 3 umfaßt die Leitung nach Fig. 1 ein Sensorelement S und drei Füllelemente 7, die in den Zwickeln zwischen den Phasenadern 1, 2 und 3 liegen und durch welche die Leitung nach Fig. 1 einen etwa kreisförmigen Querschnitt hat. Der Aufbau des Sensorelement S geht aus den Fig. 2 und 3 hervor. Die Füllelemente 7 können grundsätzlich beliebig ausgeführt sein. Mit Vorteil ist mindestens eines der Füllelemente 7 ein Schutzleiter.

Phasenadern 1, 2 und 3, Sensorelement S und Füllelemente 7 sind als Verseilelemente miteinander verseilt. Diese Verseilelemente sind von einem durch Extrusion erzeugten Innenmantel 8 umgeben, der eine etwa zylindrische Außenfläche hat. Der Innenmantel 8 kann aus einer inneren Schicht, welche die Zwickel zwischen den Verseilelementen ausfüllt, und aus einer elektrisch leitenden Gummimischung besteht, sowie aus einer darüber angebrachten, elektrisch nicht leitenden Isolierschicht als äußerer Schicht aufgebaut sein. Um den Innenmantel 8 herum kann ein als Torsionsschutz dienendes Geflecht 9 angeordnet sein, das beispielsweise aus Polyesterfäden besteht. Über dem Geflecht 9 liegt ein Außenmantel 10, der durch Extrusion erzeugt ist und mit Vorteil aus einer Gummimischung besteht, die aus einem Material auf der Basis von chloriertem Kautschuk bestehen kann.

Das Sensorelement S liegt bei der Ausführungsform der Leitung nach Fig. 1 zentral zwischen den Phasenadern 1, 2 und 3. Es besteht aus zwei Adern 11 und 12, von denen jede ein zentrales zugfestes Element 13 hat, über dem der jeweilige elektrische Leiter angebracht ist. Das zugfeste Element 13 ist beispielsweise aus Polyamidfäden aufgebaut. Die Leiter der Adern 1 und 12 bestehen jeweils aus zwei Lagen 14 und 15 aus Kupferdrähten, die mit gegenläufiger Umseilrichtung aufgebracht sind. Die innere Lage 14 ist jeweils um das zugfeste Element 13 umseilt, während die äußere Lage 15 um die innere Lage 14 umseilt ist (Fig. 3). Über den Leitern der Adern 11 und 12 ist jeweils eine durch Extrusion erzeugte Isolierung 16 aus einem elektrisch hochwertigen Material angebracht. Sie besteht mit Vorteil aus einem vernetzten, polymeren Material mit einer Dielektrizitätszahl der Isolierung 16 von mindestens 6,0 bei Raumtemperatur. In bevorzugter Ausführungsform liegt die Dielektrizitätszahl der Isolierung 16 mindestens bei 6,5 bei Raumtemperatur.

In den Zwickeln zwischen den Adern 11 und 12 sind zwei Beiläufe 17 und 18 angeordnet, die gemeinsam mit den Adern 11 und 12 verseilt sind. Sie bestehen beispielsweise aus Polyethylenterephthalat-Zwirnen. Die verseilte Einheit aus Adern 11 und 12 sowie Beiläufen 17 und 18 ist beispielsweise von einer Lage Polyestervlies umgeben, über welcher eine Lage aus einer Polyethylenterephtalat-Folie 19 angebracht ist. Über der Folie 19 ist ein durch Extrusion erzeugter Mantel 20 angebracht, der aus einem elektrisch leitfähigen polymeren Material besteht. An Stelle des Polyestervlieses können auch ein Vlies aus Kupferfäden oder ein Kupfergeflecht eingesetzt werden, über denen dann die Folie 19 liegt. Das Sensorelement S hat dann eine verbesserte elektrische Schirmung.

Das Sensorelement S kann im Aufbau der Leitung auch eine gegenüber Fig. 1 abweichende Position haben. Es kann gemäß Fig. 4, welche nur die Verseilelemente in schematischer Darstellung ohne die dieselben umgebenden Schichten zeigt, beispielsweise in nicht zentraler Lage in einem Zwickel zwischen den Phasenadern 1, 2 oder 3 verseilt sein. Bei dieser Ausführungsform der Leitung sind wieder drei Füllelemente 7 vorhanden, von denen eines als Kernelement dient. Die beiden anderen liegen in den verbleibenden Zwickeln zwischen den Phasenadern 1, 2 und 3. Der sonstige Aufbau der Leitung entspricht dem für die Leitung nach Fig. 1 beschriebenen Aufbau.

## Patentansprüche

1. Flexible elektrische Leitung, welche in einer Seele mindestens ein Sensorelement (S) und aus isolierten elektrischen Leitern bestehende Adem (1,2,3) aufweist, die von einem gemeinsamen Außenmantel (10) aus Isoliematerial umg eben sind, bei welcher das Sensorelement (S) aus zwei jeweils einen isolierten elektrischen Leitermit einem zugfesten Zentralelement aufweisenden Adem (11,12) besteht, die zusammen mit zwei aus Isoliematerial bestehenden Beiläufen (17,18) zu einer Enheit verseilt sind, welche von einer Bandierung aus Isoliermaterialumgeben ist, überdere in Mantel (20) angeordnet ist, **dadurch gekennzeichnet,**
- **daß** in derSeele derLeitung als elektrische Adem drei miteinanderverseilte, derEnergieübeitragung mitüber1 kV liegenden Spannungen dienende Phasenadem (1,2,3) angeordnet sind, die jeweils zumindest eine den Leiter umgebende innere Leitschicht (5) und eine darüberliegende Isolierung (6) a ufwe ise n,
- **daß** die LeiterderAdem (11,12) des Sensozelements(S) aus Kupfeidrähten bestehen, die das zugfeste Zentralelement(13) in zweiLagen (14,15) mit gegenläufiger Umseilrichtung umgeben,
- **daß** die Isolierung (16) derAdem (11,12) des Sensorelements(S) aus einem mittels Extrusion aufgebrachten, vernetzten elastomeren Material mit einer Dielektrizitätszahl von mind e ste ns 6,0 bei Raumtemperatur besteht,
- **daß** die Einheit aus miteinanderverseilten Adem (11,12) und Beiläufen (17,18) des Sensorelements von einem Mantel (20) aus einem elektrisch leitfähigen polymeren Material umgeben ist und
- **daß** die aus Phasenadem (1,2,3) und Sensorelement (S) bestehende Seele der Leistung vo n einem gemeinsamen, durch Extrusion erzeugten Innenmantel (8) umgeben ist, überwelchem der Außenmantel (10) angeordnet ist.

2. Leitung nach Anspruch 1, **dadurch gekennzeichnet, daß** die Kupferdrähte der LeiterderAdem (11,12) des Sensorelements(S) verzinnt sind.

3. Leistung nach Anspruch 1 oder 2, **dadurch gekennzeichnet, daß** die Enheit aus miteinanderverseilten Adem (11,12) und Beiläufen (17,18) des Sensorelements(S) von einem Vlies aus Kupferfäden umgeben ist, überdem eine Polyethylenterephthalat-Folie (19) angebracht ist.

4. Leitung nach Anspruch 1 oder 2, **dadurch gekennzeichnet daß** die Einheit aus miteinander verseilten Adem (11,12) und Beiläufen (17,18) des Sensorelements(S) von einem Kupfergeflecht umgeben ist, überdem eine Polyethylenterephthalat-Folie (19) angebracht ist.

5. Leitung na c h einem der Ansprüche 1 bis 4, **dadurch gekennzeichnet, daß** der Innenmantel (8) a us einer inneren extrudierten Leitgummise hic ht und e ine r darüberextrudierten Schicht aus elektrisch nichtleitendem Isoliermaterialbesteht.

6. Leitung na c h einem der Ansprüche 1 bis 5, **dadurch gekennzeichnet, daß** der Innenmantel(8) vo n einem als Torsionsschutz d ie ne nd e n G e fle c ht (9) a us Polyesterfäden umgeben ist.

7. Leitung nach einem der Ansprüche 1 bis 6, **dadurch gekennzeichnet, daß** der Außenmantel(10) aus einem Material auf der Basis von chloriertem Kautschuk besteht.

## Claims

1. A flexible electrical line, which comprises a core, at least one sensor element (S) and leads (1,2,3) consisting of insulated electrical conductors which are surrounded by a common outer sheath (10) of insulation material, wherein the sensor element (S) consists of two leads (11,12) each having an insulated electrical conductor with a tension-proof central element, which are stranded together into a unit with two filler strands (17,18) consisting of insulating material, wherein the unit is surrounded by a banding of insulation material over which a sheath (20) is arranged, **characterized in**
- **that** in the core of the line are arranged as electrical leads, three phase leads (1,2,3), which are stranded together and serve for transmitting energy with voltages above 1 kV and which have at least respectively one inner conductive layer (5) surrounding the conductor and an insulation (6) above the conductive layer,
- **that** the conductors of the leads (11,12) of the sensor element (S) consist of copper wires which surround the tension-proof central element (13) in two layers with oppositely directed stranding directions,
- **that** the insulation (16) of the leads (11,12) of the sensor element (S) consists of a cross-linked elastomer material which is applied by extrusion and has a dielectricity number of at least 6.0 at room temperature,
- **that** the unit of leads (11,12) and filler strands (17,18) of the sensor element which are stranded together is surrounded by a sheath (20) of an electrically conductive polymer material, and
- **that** the core of the line, which consists of phase leads (1,2,3) and sensor element (S) is surrounded by a common inner sheath (8) produced by extrusion, above which the outer sheath (10) is arranged.

2. Line according to claim 1, **characterized in that** the copper wires of the conductors of the leads (11,12) of the sensor element (S) are galvanized.

3. Line according to claim 1 or 2, **characterized in that** the unit of stranded leads (11,12) and filler strands (17,18) of the sensor element (S) are surrounded by a fleece of copper threads over which is arranged a polyethylene terephthalate foil (19).

4. Line according to claim 1 or 2, **characterized in that** the unit of stranded leads (11,12) and filler strands (17,18) of the sensor element (S) is surrounded by a copper mesh, over which is arranged a polyethylene terephthalate foil (19).

5. Line according to one of the claims 1 to 4, **characterized in that** the inner sheath (8) is composed of an inner extruded conducting rubber layer and a layer of electrically nonconductive insulation material which is extruded over the same.

6. Line according to one of the claims 1 to 5, **characterized in that** the inner sheath (8) is surrounded by a mesh (9) of polyester threads serving as torsion protection.

7. Line according to one of the claims 1 to 6, **characterized in that** the outer sheath (10) is composed of a material on the basis of chlorinated rubber.

## Revendications

1. Câble électrique flexible qui présente dans une âme au moins un élément de détection (S) et des fils (1, 2, 3) composés de conducteurs électriques isolés, lesquels sont entourés par une gaine extérieure (10) commune en matériau isolant, avec lequel l'élément de détection (S) se compose de deux fils (11, 12) qui présentent respectivement un conducteur électrique isolé avec un élément central résistant à la traction, lesquels, en association avec deux fils de repère (17, 18) composés de matériau isolant, sont toronnés en une unité qui est entourée d'un bandage en matériau isolant au-dessus duquel est disposée une gaine (20), **caractérisé en ce**
- **que** les fils électriques disposés dans l'âme du câble sont trois fils de phase (1, 2, 3) toronnés ensemble et servant à la transmission d'énergie avec une tension supérieure à 1 kV, lesquels présentent à chaque fois au moins une couche conductrice (5) intérieure qui entoure le conducteur et un isolant (6) se trouvant au-dessus de celle-ci,
- **que** les conducteurs des fils (11, 12) de l'élément de détection (S) se composent de fils en cuivre qui entourent l'élément central (13) résistant à la traction en deux couches (14, 15) avec des sens de toronnage opposés,
- **que** l'isolant (16) des fils (11, 12) de l'élément de détection (S) se compose d'un matériau élastomère réticulé appliqué par extrusion ayant un indice diélectrique au moins égal à 6,0 à température ambiante,
- **que** l'ensemble composé des fils (11, 12) et des fils de repère (17, 18) toronnés ensemble de l'élément de détection est entouré par une gaine (20) en un matériau polymère électriquement conducteur et
- **que** l'âme du câble composée des fils de phase (1, 2, 3) et de l'élément de détection (S) est entourée d'une gaine intérieure (8) commune produite par extrusion au-dessus de laquelle est disposée la gaine extérieure (10).

2. Câble selon la revendication 1, **caractérisé en ce que** les fils en cuivre des conducteurs des fils (11, 12) de l'élément de détection (S) sont étamés.

3. Câble selon la revendication 1 ou 2, **caractérisé en ce que** l'ensemble composé des fils (11, 12) et des fils de repère (17, 18) toronnés ensemble de l'élément de détection (S) est entouré d'une toile de fils en cuivre au-dessus de laquelle est appliqué un film en polytéréphtalate d'éthylène (19).

4. Câble selon la revendication 1 ou 2, **caractérisé en ce que** l'ensemble composé des fils (11, 12) et des fils de repère (17, 18) toronnés ensemble de l'élément de détection (S) est entouré d'une tresse en cuivre au-dessus de laquelle est appliqué un film en polytéréphtalate d'éthylène (19).

5. Câble selon l'une des revendications 1 à 4, **caractérisé en ce que** la gaine intérieure (8) se compose d'une couche intérieure de caoutchouc conducteur extrudée et d'une couche extrudée sur celle-ci en un matériau isolant non conducteur électriquement.

6. Câble selon l'une des revendications 1 à 5, **caractérisé en ce que** la gaine intérieure (8) est entourée d'une tresse (9) en fils de polyester servant de protection contre la torsion.

7. Câble selon l'une des revendications 1 à 6, **caractérisé en ce que** la gaine extérieure (10) se compose d'un matériau à base de caoutchouc chloré.
